# EUROPEAN PATENT APPLICATION

(11) **EP 4 635 924 A1**
(43) Date of publication of application: **22.10.2025**
(21) Application number: 24171455.9
(22) Date of filing: 19.04.2024
(51) Int. Cl.: C04B 18/14, C04B 7/147, C04B 20/02, C04B 20/04

(54) **A SUPPLEMENTARY CEMENTITIOUS MATERIALS**

(71) Applicant: Boliden Commercial AB, 10135 Stockholm (SE)
(72) Inventor: ROOS, Åke, 122 55 STOCKHOLM (SE)
(74) Representative: Aera A/S

(57) **Abstract**

The invention relates to a supplementary cementitious material (SCM) consisting of the following components in weight %: SiOi26 - 46, CaO ≤ 6, Al₂O₃ 6 - 14, MgO ≤ 4, ZnO ≤ 1.5, Na₂O ≤ 1.5, impurities≤ 4, and FeO* balance, wherein the presence of Fe in all oxidation states is expressed as FeO*.

## Description

### TECHNICAL FIELD

The present invention is related to an improved supplementary cementitious material (SCM), which has favourable properties for being used in cement production.

### BACKGROUND TO THE INVENTION

The production of cement is a major contributor to climate change. It has therefore been a strive to find replacement materials, which have lower CO₂ emissions. Such materials are generally referred to as supplementary cementitious materials (SCM). The term "supplementary cementitious material (SCM)" refers to an inorganic material that contributes to the properties of a cementitious mixture through hydraulic or pozzolanic activity, or both. SCM products are known in the art and include ground granulated blast furnace slag (GGBFS), fly ash, copper slag and silica fume. SCM can be used individually with Portland or blended cement or in different combinations.

The term "pozzolanicity" refers to the SCM material's hydraulic, and/or pozzolanic activity and relates to the ability of the SCM material to combine with lime in the presence of water and Ca (OH)₂ to form a cement. Such activity can be studied by the R³ ("Rapid, Relevant and Reliable") Rilem test, in the following the R³ method, in which isothermal calorimetry is used to determine the heat of hydration of hydrating pastes composed of the SCM and calcium hydroxide. The results of this test strongly correlate with the strength of the mortar. The heat of the cement reaction is used to determine the reactivity of the SCM.

The suitability for use in cement increases with the reactivity. However, a drawback of many of the existing supplementary cementitious materials (SCM's) is that the reactivity is much lower than that of cement. High reactivity SCM's on the other hand have other draw backs like limited availability and/or high costs.

In addition, the pozzolanic reactivity depends on a number of different parameters with interdependencies such as the degree of crystallinity, glass structure, thermal history, granulometric properties, BET surface area, chemical composition and the like. Accordingly, it is not a straightforward task to improve the pozzolanic reactivity of a SCM.

WO2016156394 A1 is directed to an improved slag from non-ferrous metal production, which can be used in concrete and/or cement, i.e. a SCM, and discloses a slag composition with an improved hardening rate.

WO2023052611 A1 is directed to a SCM comprising iron silicate and having an amorphous matrix of at least 95 % by weight. The materials in the examples of WO2023052611 A1 were tested with an R³ method for the cumulative normalized heat produced in 168 hours (7 days). A maximum value of 65 J/g powder was obtained for a slag rich in SiO₂.

### SUMMARY OF THE INVENTION

It is an object of the present invention to provide an iron silicate based supplementary cementitious material (SCM) with an improved reactivity expressed as the cumulative heat produced in 168 hours (7 days) by the R³ method.

In this respect, the term "cementitious material" refers to an inorganic material, or a mixture of inorganic materials, that sets and develops strength by chemical reaction with water by formation of hydrates. Portland cement is the most commonly used cementitious material in industry today. It is defined by the European Standard EN 197-1 as a hydraulic material, which shall consist of at least two-thirds by mass of calcium silicates, (3 CaO·SiO₂, and 2 CaO·SiO₂), the remainder consisting of aluminium- and iron-containing clinker phases and other compounds. The ratio of CaO to SiO₂ shall not be less than 2.0. The magnesium oxide content (MgO) shall not exceed 5.0% by mass.

### DETAILED DESCRIPTION

The inventors of the present invention have carried out an extensive research program and have found that it is under certain circumstances possible to improve the pozzolanic reactivity of an iron silicate based SCM by carefully controlling the chemical composition of the SCM and subjecting the SCM to a specific treatment. Surprisingly, an unsurpassed pozzolanic reactivity as determined by the R³ method could be obtained.

The chemical composition of the SCM has to be controlled within the limits set out in the independent claim.

The importance of the separate constituents and their interaction with each other as well as the limitations of the ingredients of the claimed SCM are briefly explained in the following. All percentages for the chemical composition of the SCM are given in weight % (wt. %) throughout the description. The amounts of the microstructural constituents are given in volume % (vol. %).

Upper and lower limits of the individual constituents, defined in the dependent claims and/or set out in the description, can be combined freely with each other within the limits set out in the independent claim.

The arithmetic precision of the numerical values can be increased by one or two digits for all values given in the present application. Hence, a value reported as e.g. 0.1 % can also be expressed as 0.10 or 0.100 %.

The starting material used for producing the inventive supplementary cementitious material may be based on a ferro silicate slag but it is also possible to mix different starting materials to obtain the desired composition. Iron-rich ferro silicate slags originate for instance from copper and lead production. The composition of these slags varies considerably depending on the starting materials, which may be ore or scrap. The inventive SCM can be produced by modifying the composition of a copper slag to fall within the limits set out in the independent claim.

The effect of the different oxides on the slag structure, the viscosity, the crystallization during cooling and on the reactivity is intricate in that it would appear that there exists a complex relationship between the individual components, which is not fully understood.

The limits for the individual constituents set out in this application are based on an extensive theoretical analysis and experimental work to understand the dependency between the parameters that influences properties but the applicant does not want to be bound of theory concerning the effect of the different constituents.

The limits of the constituents are set out below (wt.%):

### SiO₂

SiO₂ is the main net-work former and is necessary for obtaining an amorphous matrix. The lower limit is 26 % and may be set to 27, 28, 29, 30, 31, 32, 33, 34, 35, 36, 37, 38, 39 or 40 %.

The upper limit is 46 % and may be set to 45, 44, 43 or 42 %.

### FeO*

FeO constitutes the balance in the modified ferro silicate slag. It should preferably be balanced to the content of SiO₂ in order to obtain a desired ratio of FeO*/SiO₂. The amount of FeO* is preferably in the range of 35 - 51 %.

The amount of Fe₂O₃ should be low. The maximum content is 10 % and may be set to 9, 8, 7, 6, 5, 4, 3, 2 or 1 %.

The ratio FeO*/SiO₂ is 0.7 - 1.7 and should preferably be 0.76 - 1.37. A low ratio increases the propensity to form tridymite and cristobalite upon cooling. A high ratio increases the propensity to precipitate fayalite and/or spinel during cooling. Accordingly, the ration can be used in order to avoid or minimize the amount of precipitates in the amorphous matrix. The lower limit may be 0.8, 0.85, 0.9 or 0.95. The upper limit may be 1.35, 1.3, 1.25, 1.2, 1.15, 1.1 or 1.05.

### CaO

CaO is generally considered as a chain breaking element that causes depolymerization of the slag. However, the experimental results indicate that CaO may have a negative effect on the reactivity. The upper limit is therefore 6 % and may be set to 5.5, 5, 4.5, 4, 3.5 or 3 %.

The lower limit is 0 % and may be set to 0.5, 1, 1.5, 2, 2.5 or 3 %.

### Al₂O₃

The effect of Al₂O₃ is not fully understood but the results of the extensive experimental program performed by the applicant indicate that a fairly high content of Al₂O₃ could be beneficial to the reactivity, possibly be increasing the amorphous content in the quenched material.

The lower limit is 6 % and may be set to 6.5, 7, 7.5 or 8 %.

The upper limit is 14 % and may be set to 13.5, 13, 12.5, 12, 11.5, 11, 10.5, 10, 9.5 or 9 %.

### MgO

MgO may enter the slag from chrome-magnesite and other MgO containing refractories used. The effect of MgO and its impact on reactivity is not fully understood.

The lower limit is 0 % and may be set to 0.5, 1 or 1.5 %.

The upper limit is 4 % and may be set to 3.5, 3, 2.5 or 2 %.

### ZnO

The upper limit is 1.5 % and may be set to 1.4, 1.3, 1.2, 1.1, 1.0, 0.95, 0.9, 0.85 or 0.8 %.

### Na₂O

Na₂O is a flux that heavily reduces the viscosity of the molten slag as well as the melting temperature and is therefore an undesired component in the present invention.

The upper limit is 1.5 % and may be set to 1.4, 1.3, 1.2, 1.1, 1.0, 0.95, 0.9, 0.85 or 0.8 %.

### Impurities

The upper limit is 4 % and may be set to 3.5, 3, 2.5, 2, 1.5 or 1 %.

The chemical composition was determined by X-ray fluorescence (XRF) spectrometry on pressed powder samples. Powder X-ray (XRD) diffraction was used to determine the mineralogical composition of the material.

The fraction of amorphous material in the samples was determined using Rietveld powder X-ray diffraction (XRD) with an internal standard of calcite (99.5 % CaCO₃).

The specific surface area of the powder was determined by the Brunauer, Emmett and Teller (BET) method.

The reactivity assessment was made by the R³ method as the cumulative heat release measured by isothermal calorimetry after 168 h according to ASTM C1897-20.

The SCM material of the present invention has been shown to exhibit a high pozzolanic reactivity. Herein, term "pozzolanic reactivity" refers to the SCM material's hydraulic, and/or pozzolanic activity and relates to the ability of the SCM material to combine with lime in the presence of water and Ca(OH)₂ to form a cement.

In the present application the reactivity of the SCM is determined by using the standard test method for measuring the cumulative heat evolved during 168 h using the Rilem R³ isothermal calorimetry method as set out in ASTM C 1897-20.

The reactivity of the SCM measured as the cumulative heat release measured by isothermal calorimetry after 168 h according to ASTM C1897-20 is 300 -700 J/g SCM. The lower limit may be set to 310. 320, 330, 3440, 350, 360, 370 or 380 J/g SCM. The upper limit may be set to 690, 680, 670, 660, 650, 640, 630, 620, 610, 600, 590, 580, 570, 560 or 550 J/g SCM.

### EXAMPLE 1

A supplementary cementitious material of the present invention was prepared by melting and water granulation followed by milling in a planetary ball mill to BET surface area of 1.04 m²/g.

The inventive material had the following composition in wt. %:

| | |
|---|---|
| SiO₂ | 36 |
| FeO* | 54 |
| CaO | 1 |
| Al₂O₃ | 8 |
| MgO | 1 |
| FeO*/SiO₂ | 1.5 |

The reactivity was measured as the cumulative heat after 7 days (168 hours) by the R³ isothermal calorimetry and was found to be 396 J/g SCM. The inventive material was fully amorphous.

### EXAMPLE 2

A supplementary cementitious material of the present invention was prepared by melting and water granulation followed by milling in a planetary ball mill to BET surface area of 1.11 m²/g.

The material had the following composition in wt. %:

| | |
|---|---|
| SiO₂ | 27 |
| FeO* | 64 |
| CaO | 1 |
| Al₂O₃ | 7 |
| MgO | 1 |
| FeO*/SiO₂ | 2.4 |

The reactivity was measured as the cumulative heat after 7 days (168 hours) by the R³ isothermal calorimetry and was found to be 320 J/g SCM. The material was found to have crystalline content of 10 % in an amorphous matrix.

### INDUSTRIAL APPLICABILITY

The improved supplementary cementitious material of the present invention has a high pozzolanic reactivity and is a suitable SCM for replacement of CaO in cement and concrete.

## Claims

1. A supplementary cementitious material (SCM) consisting of the following components in weight %:
| | |
|---|---|
| SiO₂ | 26 - 46 |
| CaO | ≤ 6 |
| Al₂O₃ | 6 - 14 |
| MgO | ≤ 4 |
| ZnO | ≤ 1.5 |
| Na₂O | ≤ 1.5 |
| impurities | ≤ 4 |
| FeO* | balance |
wherein the presence of Fe in all oxidation states is expressed as FeO*.

2. The supplementary cementitious material as defined in claim 1, wherein the material fulfils one or more of the following requirements in weight %:
| | |
|---|---|
| SiO₂ | 34 - 44 |
| CaO | ≤ 5 |
| Al₂O₃ | 6.5 - 13 |
| MgO | ≤ 3 |
| ZnO | ≤ 1.2 |
| Na₂O | ≤ 1.2 |
| impurities | ≤ 3 |
and/or wherein the matrix of the supplementary cementitious material comprises an amorphous phase of at least 94 volume %.

3. The supplementary cementitious material as defined in claim 1 or 2, wherein the material fulfils one or more of the following requirements in weight %:
| | |
|---|---|
| SiO₂ | 40 - 43 |
| CaO | ≤ 4.5 |
| Al₂O₃ | 7 - 12.5 |
| MgO | < 2.5 |
| ZnO | ≤ 1.0 |
| Na₂O | ≤ 1.0 |
| impurities | ≤ 3 |
and/or wherein the matrix of the supplementary cementitious material comprises an amorphous phase of at least 96 volume %.

4. The supplementary cementitious material as defined in any of the preceding claims, wherein the material fulfils one or more of the following requirements in weight %:
| | |
|---|---|
| SiO₂ | 40.5 - 42.5 |
| CaO | ≤ 4 |
| Al₂O₃ | 7.5 - 12 |
| MgO | ≤ 2 |
| ZnO | ≤ 0.95 |
| Na₂O | ≤ 0.95 |
and/or wherein the matrix of the supplementary cementitious material is entirely amorphous.

5. The supplementary cementitious material as defined in any of the preceding claims, wherein the reactivity of the supplementary cementitious material measured as the cumulative heat release measured by isothermal calorimetry according to ASTM C1897-20 is 300 - 700 J/g SCM.

6. The supplementary cementitious material as defined in any of the preceding claims, wherein the reactivity of the supplementary cementitious material measured as the cumulative heat release measured by isothermal calorimetry according to ASTM C1897-20 is 370 - 550 J/g SCM.

7. The supplementary cementitious material as defined in any of the preceding claims, wherein the ratio FeO*/SiO₂ is 0.76 - 1.37, preferably 0.9 - 1.2, more preferably 0.95 - 1.1.
